# EUROPEAN PATENT SPECIFICATION

(11) **EP 2 773 219 B1**
(45) Date of publication and mention of the grant of the patent: **15.06.2016**
(21) Application number: 12778352.0
(22) Date of filing: 29.10.2012
(51) Int. Cl.: A23G 1/56

(54) **LIQUID CHOCOLATE CONCENTRATE FOR USE IN A BEVERAGE DISPENSING MACHINE**
FLÜSSIGES SCHOKOLADENKONZENTRAT ZUR VERWENDUNG IN EINER GETRÄNKEABFÜLLANLAGE
CONCENTRÉ DE CHOCOLAT LIQUIDE UTILISÉ DANS UN DISTRIBUTEUR DE BOISSONS

(30) Priority: 01.11.2011 WO PCT/US2011/058812
(43) Date of publication of application: 10.09.2014
(73) Proprietor: Nestec S.A., 1800 Vevey (CH)
(72) Inventor: NUNEZ, Leticia, Dublin, OH 43017 (US); NAPOLITANO, Guillermo, Eduardo, Dublin, OH 43017 (US); MACHATTIE, Roland, A., Marysville, OH 43040 (US)
(74) Representative: Ducreux, Marie
(86) International application number: PCT/EP2012/071377
(87) International publication number: WO 2013/064456

(56) References cited:
- WO-A1-2006/056401
- WO-A2-2010/149323
- GB-A- 401 333
- US-A- 2 813 795

## Description

### BACKGROUND

The present invention relates to a liquid chocolate concentrate able to be used to prepare chocolate beverages by means of a beverage-dispensing machine.

The beverage industry currently uses a number of product formats to deliver various beverages to the consumer in a convenient manner, including ready to consume liquids, dry mixes and liquid concentrates. Shipping and storage costs of bulky, ready to consume products are relatively high, and refrigeration may be required to increase shelf life. This is particularly true for packaging, shipping and storing single serve bottles, cans, bags or boxes.

Liquid concentrates in bulk packaging may be mixed with water and rapidly chilled or heated by dispenser systems at the point of consumption. The higher concentrations reduce shipping bulk and cost by eliminating shipment of water, which is easily obtained at the final mixing location. Packaging costs are also reduced. Yet, concentrates may be of a lower quality compared to ready to consume products due to poor taste or mouthfeel : there is a practical limit on the degree of concentration obtainable for liquid beverage concentrates, in that the water content must remain high enough to provide a flowable product that is readily pumped and mixed to obtain the desired final product. Furthermore, a product that is too viscous or that is not readily miscible will require longer mixing times and/or more agitation to properly prepare the final product from the concentrate.

Moreover it has been observed that the existing products present a viscosity that is not stabilized in time : after one month, the viscosity increases and the product can sometimes no more be dispensed.

It is also well known that the viscosities of the liquid chocolate concentrates are sensitive to temperature changes. In particular the viscosities of concentrates containing high levels of cocoa solids are significantly increased when exposed to refrigeration temperatures of less than 15°C and are worsening as temperatures are further reduced. These viscosity increases are due to the formation of fat crystals in the presence of cocoa insoluble particles at refrigeration temperatures ; this phenomenon is amplified if the concentrates are subsequently stored at room temperatures (20-25°C).

There is, therefore, a need for improved formulations of liquid chocolate concentrates with a high content of cocoa solids that optimize shipping, handling and storage considerations, but remain flowable and miscible for ease of pumping, accuracy of dispensing, and ease and speed of mixing to provide final beverages. There is also a continued need for liquid beverage concentrates that are resistant to spoilage and can be stored under ambient or cooled conditions for several months without physical change.

### SUMMARY OF THE INVENTION

One aim of the present invention is to solve the previously mentioned problems and to provide liquid chocolate concentrates that can be simply diluted with water to prepare the intended final chocolate beverage.

The present invention now provides liquid chocolate concentrates that present a high concentration of cocoa solids. These liquid chocolate concentrates also have sufficiently low viscosity to allow their dispensing with conventional beverage pumps and dispensers and with maintaining dosing accuracy in the dispensing over the time of their shelf life.

The invention also provides liquid chocolate concentrates that present a high concentration of cocoa solids, have sufficiently low viscosity to allow their dispensing with conventional beverage pumps and dispensers and of which viscosity does not increase significantly during storage.

It is finally another object of the invention to provide liquid chocolate concentrates that present a high concentration of cocoa solids, have sufficiently low viscosity to allow their dispensing with conventional beverage pumps and dispensers and of which viscosity does not increase significantly during storage at refrigeration temperatures of less than 15°C.

According to a first aspect, the invention concerns a liquid chocolate concentrate presenting a cocoa solids concentration between 14 and 16 % in weight and comprising a heat treated cocoa butter.

The liquid chocolate concentrate of the present invention comprises a particular cocoa butter that is a heat treated cocoa butter. The physical and chemical properties of cocoa butters can vary due to the natural variability between different growing regions and the technological parameters applied to recover and refine the cocoa butter. Heat treated cocoa butters are commercially available cocoa butters which exhibit modified crystallization behavior. These cocoa butters are obtained by heat treatment, for example by heating a standard cocoa butter for 1 hour at 250°C under vacuum as described in Confectionery Fats Handbook, R.E. Timms, The Oily Press (2003). This heat treatment causes a change in the triglycerides composition of the standard cocoa butters reducing the symmetrical mono-unsaturated triglycerides species and increasing the di- and trisaturated triglycerides, leading to a higher melting range than the starting standard cocoa butters.

In a preferred embodiment of the invention, the heat treated cocoa butter has a solid fat content at 35°C greater than 2 % (measured by Pulsed Nuclear Magnetic Resonance (pNMR) with thermal pre-treatment method of: 60 mins at 80°C, 30 mins at 60°C, 90 mins at 0°C, 40 hours at 26°C and 90 mins at 0°C. Each sample was then equilibrated for 30 minutes at each measurement temperature before being measured.).

An example of a commercial heat treated cocoa butter fitting the present definition and the purpose of the invention is "BC/50-Y" sold by Eulip, Parma, Italy.

Preferably the liquid chocolate concentrate of the invention comprises between 1,4 and 1,7 % in weight of heat treated cocoa butter. The liquid chocolate concentrate can also comprise a standard cocoa butter apart from the heat treated cocoa butter.

Preferably the liquid chocolate concentrate presents a viscosity of at most 300 mPa.s. The liquid chocolate concentrate of the present invention can present a viscosity of at most 300 mPa.s after exposure to a temperature inferior to 15°C. It has also be noticed that the viscosity does not significantly increase after exposure to a temperature inferior to 15°C and re-warming to 20°C. According to the present invention the viscosity increases over time after re-warming are significantly reduced compared with existing products. The value of the viscosity is given for a measurement made on the product presenting a temperature of 23°C.

Usually the liquid chocolate concentrate comprises at least sweeteners, colorants, micronutrients and/or flavors. The sweetener can be carbohydrate-based sweetener selected from the group consisting of sugars, sugar substitutes, sugar derivatives and mixtures of same. According to the preferred embodiment the concentrate can comprise between 5 and 15 % in weight of sweeteners, preferably sugar.

The liquid chocolate concentrate of the present invention presents a viscosity such that it can be pumped by pump means such as a peristaltic pump in particular at typical operating temperatures (20-25°C) even if it has been stored under temperatures variations, especially at temperatures inferior to 15°C. The chocolate concentrate of the present invention presents all the characteristics of a rich premium chocolate.

According to a second aspect the present invention concerns a process for the preparation of a liquid chocolate concentrate comprising the steps of:
a) hydrating an aqueous slurry of cocoa solids, then
b) hydrolyzing the hydrated slurry with at least one enzyme starch hydrolyser in presence of a heat treated cocoa butter, then
c) optionally adding sweeteners, flavours and/or other additives to form a concentrate, then
d) submitting the concentrate to a UHT thermal process, then
e) homogenizing the thermally processed concentrate.

In step a), an aqueous slurry of cocoa is prepared by mixing cocoa solids with water, preferably in a ratio of cocoa solids relative to water comprised between 20 and 23 % in weight. This slurry is cooked until starches and pectins of the cocoa solids are hydrated. Preferably, the slurry of cocoa solids is hydrated by cooking at a temperature of at least 90°C during at least 45 minutes. Usually the slurry is agitated during step a). This agitation enables a thorough hydration and prevents of "burn-on" on the heating vessel walls. The slurry resulting from step a) is extremely viscous at room temperature and approaches the consistency of a paste at room temperature.

According to a preferred embodiment, in step b), the heat treated cocoa butter is added to the hydrated cocoa solids slurry and the slurry is hydrolysed with at least one starch hydrolyser, preferably with a mixture of enzymes comprising at least at least one enzyme selected from amylases and/or pectinases. Preferably the hydrolysation is implemented so that a complete hydrolysis of the starches and pectins is reached. During step b) the hydrolysation can happen at a temperature comprised between 55 and 60°C. Preferably the hydrolysation is implemented during at least 30 minutes. The slurry is generally agitated during hydrolysation. Further to the hydrolysation step, the slurry becomes thin and flowable at room temperature and while it may have a tendency to thicken over time, it takes a considerable time to do so (more than 6 months).

Then in step c), sweeteners, colorants, micronutrients and/or flavours can be added to the cocoa slurry.

During step d), a UHT (Ultra High Temperature) thermal process step is implemented.

Then in step e), the product is homogenized. In the present text, the homogenization means an intensive blending of the slurry to reduce the size of the fat particles in suspension in the slurry so that it no longer separate and so that the concentrate presents a homogeneous phase. Generally the homogenization is a high pressure homogenisation. The high pressure homogenisation can be implemented with a homogenizer working by forcing the concentrate through a very narrow channel or orifice under pressure. Preferably in the present invention the high pressure homogenisation is implemented at a pressure above 200 bar. It can be implemented at a temperature of at most 85°C, preferably comprised between 75 and 85 °C. Homogenisation serves to prevent coalescence of fat droplets into larger particles.

Further to step e) the liquid concentrate chocolate can be filled into packages. Preferably, the filling is implemented after the concentrate has reached a temperature of about 20-30°C.

According to a third aspect, the invention concerns the use of a liquid chocolate concentrate such as described herein to prepare a chocolate beverage.

According to a fourth aspect, the present invention concerns a process of preparation of a chocolate beverage which comprises diluting a liquid chocolate concentrate such as described herein with a diluent, generally water. Preferably one part of the liquid chocolate concentrate is diluted with 0.70 to 2 parts of diluent. The liquid chocolate concentrate can be diluted in presence of other liquid beverage concentrates like milk or coffee or tea concentrates. Also, milk, tea or coffee beverages can be used as the diluent. According to the preferred embodiment, the preparation of the beverage is performed by means of a beverage dispensing machine. Due to the low viscosity of the liquid chocolate concentrate, it can be pumped before diluting and with consistent dosing accuracy.

According to a fifth aspect, the present invention concerns a chocolate beverage prepared according to the process of preparation such as described herein.

One additional benefit from the liquid chocolate concentrate of the present invention is that due to its inherent viscosity stability, the concentrate remains able to be pumped in the same dispenser without recalibration whether it has been freshly produced (for example 1 month old) or it is an older product (for example 6 months old) and even if the concentrate has been submitted to temperature variations, in particular to a temperature inferior to 15°C.

Another additional benefit from the liquid chocolate concentrate of the present invention is that it can be used for producing several chocolate beverages of different final concentrations, in particular: a higher-cocoa super-premium chocolate beverage with a low dilution ratio and a more conventional chocolate beverage with a higher dilution ratio.

In the present invention, the viscosity is measured with a viscometer model of reference Brookfield LVT to HBT (according to viscosity of the product) implementing a Spindle 27 (no spindle guard was used), a rotational speed of 50 rpm, with a sample container in instrument approximately a 2,5 cm diameter and 10 cm long (standard Brookfield equipment) and thermostated at 23°C.

In the present invention the liquid chocolate concentrate refers to a water-based concentrate comprising at least :
- an oil phase behaving as an emulsion (the cocoa butter),
- insoluble cocoa solids suspended in liquid phase.

### Example 1 - comparative GC analysis of a standard cocoa butter and a heat treated cocoa butter

A standard cocoa butter and a heat treated cocoa butter were extracted by Soxhlet extraction and then analysed using Gas Chromatography (GC) to identify and quantify the triglycerides present. The heat treated cocoa butter is BC/50-Y sold by Eulip, Parma, Italy and the standard cocoa butter is "Astra A" Pure Prime Pressed Cocoa Butter sold by ADM Cocoa B.V.

1 ml hexane was added to 1 drop (approx 10 mg) of melted fat and then mixed thoroughly. The analysis was carried out by GC fitted with a Flame lonisation Detector. The column used was a DB 17-HT (coating (50%-Phenyl)-methylpolysiloxane, length : 30 m, internal diameter : 0,25 mm, film thickness : 0,15 µm). 1µl of sample was injected manually. The inlet temperature was set to 360°C, split mode was used and the oven temperature was ramped up to 340°C. Identification of triglyceride species was done by retention time comparison with an external standard. Response factors are applied, calculated from authentic reference sample mixtures. Triglyceride profile or triglyceride quantification was determined by the percentage of each detected species relative to the total peak area (normalization to 100 %).

Selected triglycerides (average of 2 determinations) are given in the table below.

**Table 1**

| **Triglyceride** | **Standard cocoa butter Average result made on 4 analyses** | **Eulip BC/50 cocoa butter Average result made on 9 analyses** |
|---|---|---|
| PPP | 0.3 | 3.9 |
| PPS | 1.0 | 12.0 |
| POP | 14.3 | 8.9 |
| PLP | 0.7 | 0.5 |
| PSS | 1.2 | 14.0 |
| POS | 48.2 | 26.6 |
| POO | 2.7 | 7.1 |
| PLS | 1.5 | 1.0 |
| PLO | 0.2 | 0.6 |
| SSS | 0.3 | 2.9 |
| SOS | 21.5 | 10.2 |
| SOO | 3.0 | 5.7 |
| SLS+OOO | 0.3 | 1.9 |
| SLO | 0.2 | 0.4 |
| Other | 4.8 | 4.3 |

| | | |
|---|---|---|
| Key : P = Palmitic (C16:0 saturated), S = Stearic (C18:0 saturated), O = Oleic (C18:1 unsaturated), L = Linoleic (C18:2 unsaturated). | | |

It can be seen that there is a small reduction in symmetrical mono-unsaturated triglycerides species (Saturated - Unsaturated - Saturated, such as POP, POS and SOS) and an increase in di- and trisaturated triglycerides (such as PPP, PPS, PSS, SSS) in the heat treated cocoa butter used in the present invention compared to the standard cocoa butter.

### Example 2 - liquid chocolate concentrates properties

In order to evaluate the effect of adding heat treated cocoa butter in a liquid chocolate concentrate, liquid chocolate concentrate samples with and without such a cocoa butter were produced and the viscosity of the samples with and without refrigeration was followed for a period of 4 weeks.

A first liquid chocolate concentrate A was prepared with a standard cocoa powder (commercial reference : Cocoa Powder, Lucia 20-22 %) that contained between 20 and 22 % in weight fat (that is standard cocoa butter) so that the final fat content in the concentrate was about 3 % in weight.

A second liquid chocolate concentrate B according to the invention was prepared with a standard cocoa powder (commercial reference : Cocoa Powder, Lucia 10-12 %) that contained between 10-12 % in weight fat (that is standard cocoa butter) and with a heat treated cocoa butter (commercial reference : Eulip BC/50-Y) so that the final fat content in the concentrate was about 3 % in weight.

The compositions in weight of the liquid chocolate concentrate A and B are detailed in Table 2.

**Table 2**

| Ingredients | Liquid concentrate A | Liquid concentrate B |
|---|---|---|
| Water | 72,7 | 71,1 |
| cocoa powder containing 20 and 22 % in weight fat | 14 | 0 |
| cocoa powder containing 10 and 12 % in weight fat | 0 | 14 |
| cocoa butter Eulip BC/50-Y | 0 | 1,6 |
| Sucrose | 12,7 | 12,7 |
| Enzyme | 0,6 | 0,6 |

The liquid concentrates A and B were produced according to the following process :
- preparing an aqueous slurry of cocoa solids by mixing and heating water and cocoa powder at a temperature of 90°C during 45 minutes,
- optionally adding cocoa butter Eulip BC/50-Y in the heat treated slurry (for liquid concentrate B), then
- cooling the hydrated slurry at 50-55°C and then hydrolyzing it with at least one starch hydrolyser enzyme, then
- adding sucrose, then
- thermally treating the concentrate according to a UHT process by heating up with direct steam injection to 145°C, and holding at this temperature for about 41 seconds, followed by flash cooling to 80°C, then
- at this temperature, the product is homogenized at 200 bar on first stage and then 40 bar on second stage, then
- filling the concentrate in 3 litre aluminium bags at a temperature of about 25°C.

The viscosities of the concentrates A and B were measured at regular intervals during 30 days :
- the viscosity of concentrate A was measured after storage at room temperature (about 20°C) or after refrigeration,
- the viscosity of concentrate B was measured after refrigeration.

The samples A and B measured after refrigeration were refrigerated at 4°C for 24 hours. After this period they were taken out of refrigeration, placed into room at ambient temperature (20-22°C) and kept at this temperature until measurements were taken. The viscosities of the first samples were measured immediately after 24 hours of refrigeration. Next measurements were taken at 1, 2, 3, 5, 6, 7, 8, 11, 20 and 27 days until complete bag was evacuated

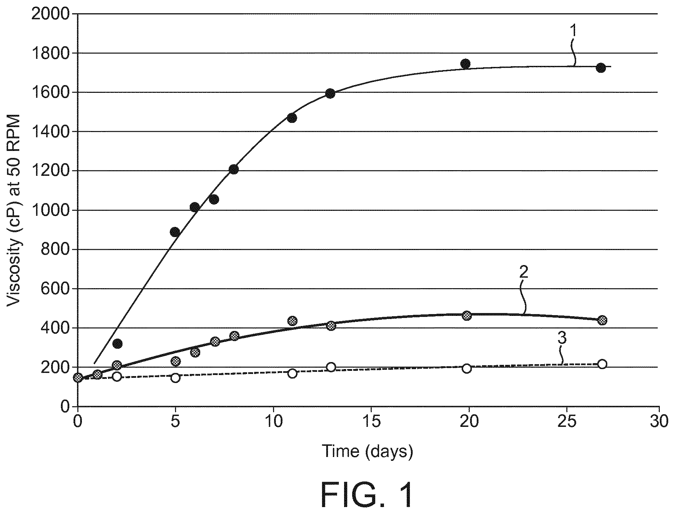

The viscosities were measured at 50 rpm, 23 °C, with a Brookfield Viscometer, spindle n° 27. The results of the measures are illustrated in Figure 1 :
- curve 1 represents the viscosity of concentrate A after refrigeration,
- curve 2 represents the viscosity of concentrate A without refrigeration,
- curve 3 represents the viscosity of concentrate B after refrigeration.

For the liquid chocolate concentrate A, the viscosity increases from 150 mPa.s just after production and packaging to 1750 mPa.s after refrigeration and to 440 mPa.s when sample was not refrigerated.

For the liquid chocolate concentrate B, the viscosity increases from 150 mPa.s just after production and packaging to 220 mPa.s after refrigeration.

From this figure, it can be seen that the viscosity on samples containing heat treated cocoa butter was significantly reduced compared to those samples prepared with standard cocoa butter.

Liquid chocolate concentrates containing heat treated cocoa butter can withstand temperature fluctuations without affecting their flow ability properties. This is an advantage when use in dispensing machines, because end cup quality is much more consistent due to a more even viscosity over the time.

## Claims

1. A liquid chocolate concentrate presenting a cocoa solids concentration between 14 and 16 % in weight, presenting a viscosity of at most 300 mPa.s and comprising a heat treated cocoa butter, said heat treated cocoa butter presents a triglycerides composition with reduced symmetrical mono-unsaturated triglycerides and increased di- and trisaturated triglycerides species compared to the triglycerides composition of a standard cocoa butter.

2. The liquid chocolate concentrate according to claim 1 which further comprises between 1,4 and 1,7 % in weight of heat treated cocoa butter.

3. The liquid chocolate concentrate according to any of claims 1 or 2 which further comprises one or more of sweeteners, colorants, micronutrients or flavours.

4. A process for the preparation of a liquid chocolate comprising the steps of:
a) hydrating an aqueous slurry of cocoa solids, then
b) hydrolyzing the hydrated slurry with at least one enzyme starch hydrolyser in presence of a heat treated cocoa butter, said heat treated cocoa butter presenting a triglycerides composition with reduced symmetrical mono-unsaturated triglycerides and increased di- and trisaturated triglycerides species compared to the triglycerides composition of a standard cocoa butter, then
c) optionally adding sweeteners, flavours and/or other additives to form a concentrate, then
d) submitting the concentrate to a UHT thermal process, then
e) homogenizing the thermally processed concentrate.

5. The process according to claim 4 wherein further to step e) the liquid concentrate chocolate is filled into packages.

6. Use of the liquid chocolate concentrate according to any of claims 1 to 3 to prepare a chocolate beverage.

7. A process of preparation of a chocolate beverage which comprises diluting a liquid chocolate concentrate according to any of claims 1 to 3 with a diluent.

8. The process according to claim 7 which comprises diluting one part of the liquid chocolate concentrate with 0,70 to 2 parts of a diluent such as water, milk, tea or coffee.

9. The process according to claim 7 or 8 wherein the liquid chocolate concentrate is diluted in presence of other liquid beverage concentrates including milk or coffee or tea concentrates.

10. The process according to any of claims 7 or 8 wherein the preparation of the beverage is performed by means of a beverage-dispensing machine.

11. The process according to Claim 10, which comprises pumping the liquid chocolate concentrate before diluting.

12. A chocolate beverage prepared according to the process according to Claim 7.

13. A package comprising a flexible storing pouch, a flexible tube coupled in fluid communication with the pouch and a one way aseptic valve, the storing pouch comprising multiple portions of a liquid chocolate concentrate according to any of claims 1 to 3.

14. The package according to claim 12 wherein the one way aseptic valve comprises a delivery block having an input port for receiving concentrate exiting the tube outlet and an internal channel beginning at the input port and terminating in at least one output port, an elastomeric membrane for enveloping the delivery block such that a portion of the elastomeric membrane covers the output port and the downstream end of the elastomeric membrane forms the valve outlet.

## Patentansprüche

1. Flüssiges Schokoladenkonzentrat aufweisend eine Kakaofeststoffkonzentration zwischen 14 und 16 Gew.-%, aufweisend eine Viskosität von höchstens 300 mPa.s und eine wärmebehandelte Kakaobutter umfassend, wobei die wärmebehandelte Kakaobutter eine Triglyceridzusammensetzung mit verringerten symmetrischen einfach ungesättigten Triglyceriden und erhöhten zweifach und dreifach gesättigten Triglyceridarten im Vergleich zu der Triglyceridzusammensetzung einer Standardkakaobutter aufweist.

2. Flüssiges Schokoladenkonzentrat nach Anspruch 1, das ferner zwischen 1,4 und 1,7 Gew.-% wärmebehandelte Kakaobutter umfasst.

3. Flüssiges Schokoladenkonzentrat nach einem der Ansprüche 1 oder 2, das ferner einen oder mehrere von Süßstoffen, Farbstoffen, Mikronährstoffen oder Geschmacksstoffen umfasst.

4. Verfahren zur Herstellung einer flüssigen Schokolade, das die folgenden Schritte umfasst:
a) Hydratisieren einer wässrigen Masse aus Kakaofeststoffen, anschließend
b) Hydrolisieren der hydratisierten Masse mit mindestens einem Enzym-Stärke-Hydrolisator in Gegenwart einer wärmebehandelten Kakaobutter, wobei die wärmebehandelte Kakaobutter eine Triglyceridzusammensetzung mit verringerten symmetrischen einfach ungesättigten Triglyceriden und erhöhten zweifach und dreifach gesättigten Triglyceridarten im Vergleich zu der Triglyceridzusammensetzung einer Standardkakaobutter aufweist, anschließend
c) gegebenenfalls Hinzufügen von Süßstoffen, Geschmacksstoffen und/oder anderen Zusatzstoffen, um ein Konzentrat zu bilden, anschließend
d) Aussetzen des Konzentrats gegenüber einem Ultrahocherhitzungsverfahren, anschließend
e) Homogenisieren des thermisch behandelten Konzentrats.

5. Verfahren nach Anspruch 4, wobei zusätzlich zu Schritt e) das flüssige Schokoladenkonzentrat in Verpackungen gefüllt wird.

6. Verwendung des flüssigen Schokoladenkonzentrats nach einem der Ansprüche 1 bis 3 zum Zubereiten eines Schokoladengetränks.

7. Verfahren zur Zubereitung eines Schokoladengetränks, das das Verdünnen eines flüssigen Schokoladenkonzentrats nach einem der Ansprüche 1 bis 3 mit einem Verdünnungsmittel umfasst.

8. Verfahren nach Anspruch 7, das das Verdünnen eines Teils des flüssigen Schokoladenkonzentrats mit 0,70 bis 2 Teilen eines Verdünnungsmittels wie Wasser, Milch, Tee oder Kaffee umfasst.

9. Verfahren nach Anspruch 7 oder 8, wobei das flüssige Schokoladenkonzentrat unter Vorhandensein anderer flüssiger Getränkekonzentrate einschließlich Milch- oder Kaffee- oder Teekonzentraten verdünnt wird.

10. Verfahren nach einem der Ansprüche 7 oder 8, wobei die Zubereitung des Getränks mittels einer Getränkeausgabevorrichtung ausgeführt wird.

11. Verfahren nach Anspruch 10, das das Pumpen des flüssigen Schokoladenkonzentrats vor dem Verdünnen umfasst.

12. Schokoladengetränk, das gemäß dem Verfahren nach Anspruch 7 zubereitet wurde.

13. Verpackung, die einen nachgiebigen Aufbewahrungsbeutel, ein biegsames, mit dem Beutel in Fluidverbindung stehendes Rohr und ein keimfreies Einwegventil umfasst, wobei der Aufbewahrungsbeutel mehrere Portionen eines flüssigen Schokoladenkonzentrats nach einem der Ansprüche 1 bis 3 umfasst.

14. Verpackung nach Anspruch 12, wobei das keimfreie Einwegventil eine Abgabesperre mit einer Eingangsöffnung zum Empfangen von aus dem Rohrauslass austretendem Konzentrat und einen Innenkanal, der an der Eingangsöffnung anfängt und an mindestens einer Ausgangsöffnung endet, eine Elastomermembran zum Umhüllen der Abgabesperre derart, dass ein Teil der Elastomermembran die Ausgangsöffnung abdeckt und das stromabwärtige Ende der Elastomermembran den Ventilauslass bildet, umfasst.

## Revendications

1. Concentré de chocolat liquide présentant une concentration en matières solides de cacao comprise entre 14 et 16 % en poids, présentant une viscosité n'excédant pas 300 mPa.s et comprenant un beurre de cacao traité thermiquement, ledit beurre de cacao traité thermiquement présente une composition de triglycérides avec une teneur réduite en espèces de triglycérides mono-insaturés symétriques et une teneur accrue en espèces de triglycérides di- et tri-saturés par comparaison avec la composition de triglycérides d'un beurre de cacao habituel.

2. Concentré de chocolat liquide selon la revendication 1, qui comprend en outre entre 1,4 et 1,7 % en poids de beurre de cacao traité thermiquement.

3. Concentré de chocolat liquide selon l'une quelconque des revendications 1 ou 2, qui comprend en outre un ou plusieurs parmi des édulcorants, des colorants, des micronutriments ou des arômes.

4. Procédé de préparation d'un chocolat liquide comprenant les étapes consistant à :
a) hydrater une bouillie aqueuse de matières solides de cacao, puis
b) hydrolyser la bouillie hydratée avec au moins un hydrolyseur enzymatique d'amidon en présence d'un beurre de cacao traité thermiquement, ledit beurre de cacao traité thermiquement présentant une composition de triglycérides avec une teneur réduite en espèces de triglycérides mono-insaturés symétriques et une teneur accrue en espèces de triglycérides di- et tri-saturés par comparaison avec la composition de triglycérides d'un beurre de cacao habituel, puis
c) facultativement ajouter des édulcorants, arômes et/ou d'autres additifs pour former un concentré, puis
d) soumettre le concentré à un procédé thermique UHT, puis
e) homogénéiser le concentré traité thermiquement.

5. Procédé selon la revendication 4, dans lequel, en plus de l'étape e), le chocolat concentré liquide est rempli dans des conditionnements.

6. Utilisation du concentré de chocolat liquide selon l'une quelconque des revendications 1 à 3 pour préparer une boisson au chocolat.

7. Procédé de préparation d'une boisson au chocolat qui comprend la dilution d'un concentré de chocolat liquide selon l'une quelconque des revendications 1 à 3 avec un diluant.

8. Procédé selon la revendication 7, qui comprend la dilution d'une partie du concentré de chocolat liquide avec 0,70 à 2 parties d'un diluant tel que de l'eau, du lait, du thé ou du café.

9. Procédé selon la revendication 7 ou 8, dans lequel le concentré de chocolat liquide est dilué en présence d'autres concentrés de boisson liquides y compris des concentrés de lait ou de café ou de thé.

10. Procédé selon l'une quelconque des revendications 7 ou 8, dans lequel la préparation de la boisson est effectuée au moyen d'une machine de distribution de boisson.

11. Procédé selon la revendication 10, qui comprend le pompage du concentré de chocolat liquide avant dilution.

12. Boisson au chocolat préparée selon le procédé selon la revendication 7.

13. Conditionnement comprenant un sachet de stockage souple, un tube souple couplé en communication fluidique avec le sachet et une soupape aseptique unidirectionnelle, le sachet de stockage comprenant plusieurs portions d'un concentré de chocolat liquide selon l'une quelconque des revendications 1 à 3.

14. Conditionnement selon la revendication 12, dans lequel la soupape aseptique unidirectionnelle comprend un bloc de distribution comportant un orifice d'entrée destiné à recevoir le concentré quittant la sortie du tube et un canal interne commençant au niveau de l'orifice d'entrée et se terminant dans au moins un orifice de sortie, une membrane élastomère destinée à envelopper le bloc de distribution de telle sorte qu'une partie de la membrane élastomère couvre l'orifice de sortie et l'extrémité en aval de la membrane élastomère forme la sortie de soupape.
